# EUROPÄISCHE PATENTSCHRIFT

(11) **EP 2 558 738 B1**
(45) Veröffentlichungstag und Bekanntmachung des Hinweises auf die Patenterteilung: **10.07.2013**
(21) Anmeldenummer: 11713810.7
(22) Anmeldetag: 12.04.2011
(51) Int. Cl.: F16C 19/52

(54) **ELEKTRISCH ISOLIERENDER LAGERRING, INSBESONDERE FÜR EIN WÄLZLAGER**
ELECTRICALLY INSULATING BEARING RING, IN PARTICULAR FOR A ROLLER BEARING
BAGUE DE PALIER ÉLECTRO-ISOLANTE, EN PARTICULIER POUR UN PALIER À ROULEMENT

(30) Priorität: 16.04.2010 DE 102010015155
(43) Veröffentlichungstag der Anmeldung: 20.02.2013
(73) Patentinhaber: Schaeffler Technologies AG & Co. KG, 91074 Herzogenaurach (DE)
(72) Erfinder: MARTIN, Gudrun, 97502 Euerbach (DE); NIE, Xiao, 91074 Herzogenaurach (DE)
(86) Internationale Anmeldenummer: PCT/EP2011/055683
(87) Internationale Veröffentlichungsnummer: WO 2011/128325

(56) Entgegenhaltungen:
- JP-A- 55 010 111
- JP-A- 2007 292 094
- JP-A- 2009 210 090
- US-A- 5 961 222

## Beschreibung

### Gebiet der Erfindung

Die Erfindung betrifft einen elektrisch isolierenden Lagerring nach Anspruch 1, insbesondere für ein Wälzlager, sowie ein Lager nach Anspruch 9, insbesondere ein Wälzlager.

Aus der Praxis ist bekannt, dass ein elektrischer Stromdurchgang durch ein Lager zu einer Beschädigung des Lagers führen kann. Es besteht daher ein Bedarf an elektrisch isolierenden Lagern, insbesondere an elektrisch isolierenden Lagerringen.

Aus dem Stand der Technik sind keramische Schichten bekannt, die als elektrisch isolierende Schichten auf ein metallisches, also elektrisch leitendes Grundkorpus des Lagerrings fest aufgebracht sind. Derartige keramische Schichten sind stoßempfindlich und können leicht abplatzen. Weiter sind keramische Schichten bei einem dünnwandigen Grundkorpus bzw. an scharfkantigen Abschnitten des Grundkorpus nicht geeignet.

Aus dem Stand der Technik sind ferner Abdeckungen, insbesondere Spritzformteile, beispielsweise aus einem Kunststoff, bekannt, die, unabhängig von dem Grundkorpus gefertigt, an das Grundkorpus angeclipst oder aufgedrückt werden. Um einen sicheren Halt an das Grundkorpus zu gewährleisten, weisen die Spritzformteile Rippen auf, die in zugeordnete Nuten an der Fläche des Grundkorpus eingreifen, so dass die Spritzformteile eine Schichtdicke von ca. einigen Millimetern aufweisen. Diese Abdeckungen wirken sich nachteilig auf die Wärmeabfuhr des Grundkorpus und damit des Lagers insgesamt aus. Weiter kann Schmutz bzw. Feuchtigkeit in den Spalt zwischen der Abdeckung und dem Grundkorpus gelangen. Weiter ist ungünstig, dass die Schichtdicke bei der konstruktiven Auslegung des Lagerrings zu berücksichtigen ist.

JP 2003 120688 AA (Abstract) beschreibt eine Abdeckung aus einem Harz.

DE 690 16 321 T2 beschreibt einen Lagerring mit einem Grundkorpus und einer an dem Grundkorpus befestigten elektrischen isolierenden Schicht aus einem Polyurethan (PUR), die eine Schichtdicke von ca. 0,5 Millimetern aufweist, wobei die elektrisch isolierende Schicht von einer metallischen Platte überdeckt ist, die die elektrisch isolierende Schicht mechanisch schützt und stabilisiert.

US 6,513,986 B2 beschreibt einen Lagerring mit einem Grundkorpus, an dem eine elektrisch isolierende Schicht angebracht ist, wobei die elektrisch isolierende Schicht aus einem Harz auf Polyphenylsulfid-Basis und Polyamid-Imid sowie nichtorganischen Zusätzen besteht. Die elektrisch isolierende Schicht ist wie eine Abdeckung über eine vorstehende Rippe an einer zugeordneten Nut an dem Grundkorpus befestigt, so das die elektrisch isolierende Schicht eine Schichtdicke im Bereich von ca. 1 Millimeter oder mehr aufweisen muss.

US 5,975,764 A beschreibt eine elektrisch isolierende Abdeckung aus einem synthetischen Kautschuk bzw. einem synthetischen Harz. Die Abdeckung weist eine vorstehende Rippe auf, die in eine zugeordnete Nut an dem Grundkorpus des Lagerrings greift, so dass die Abdeckung eine Schichtdicke von ca. 1 Millimeter oder mehr aufweist.

US 5,375,933 A beschreibt eine elektrisch isolierende Abdeckung aus einem Polyphenylensulfid-Harz, das Glasfasern als Verstärkung aufweist. Auch diese Abdeckung muss eine Dicke von 1 Millimeter oder mehr aufweisen.

JP 2007 315585 AA (Abstract) beschreibt einen Lagerring, an dessen Grundkorpus in zwei umlaufenden Nuten je ein Band aus einem Polyamid 9T-Harz aufgenommen ist, um eine mechanische Vorspannung des Lagerrings zu einer Lageraufnahme auszubilden. Die voneinander räumlich getrennten Bänder bewirken keine elektrische Isolierung des Lagerrings.

JP 11030239 AA (Abstract) beschreibt einen Lagerring mit einer elektrisch isolierenden Abdeckung, die einteilig mit einer Dichtung ausgebildet ist, wobei die elektrisch isolierende Abdeckung aus einem synthetischen Harz, einem thermoplastischen Elastomer oder einem synthetischen Kautschuk hergestellt ist.

JP 10184699 AA (Abstract) beschreibt einen Lagerring, an dessen Grundkorpus eine elektrisch isolierende Abdeckung anliegt, die aus einem thermoplastischen Elastomer gebildet ist. Auch diese Abdeckung weist eine hohe Schichtdicke auf.

JP 10306828 AA (Abstract) beschreibt einen Lagerring, an dessen Grundkorpus eine elektrisch isolierende Abdeckung aus einem Polyamid-Harz mit Faserzusätzen angespritzt ist. Auch diese Schicht weist eine hohe Schichtdicke der elektrisch isolierenden Schicht auf.

JP 2002 168253 AA (Abstract) beschreibt einen elektrisch isolierenden Lagerring, an dessen Grundkorpus eine Abdeckung aus einem Harz, insbesondere aus einem Polyphenylensulfid-Harz mit einem Polyamid-Imid-Harz sowie isolierenden anorganischen Beimischungen vorgesehen ist.

JP 2009 210090 A beschreibt einen elektrisch isolierenden Lagerring an dessen Grundkorpus eine elektrisch isolierenden Schicht aus Polyamid von 0,5 mm Dicke mittels einer Zwischenschicht angeordnet ist.

US 5,961,222 A beschreibt einen elektrisch isolierenden Lagerring an dessen Grundkorpus eine elektrisch isolierenden Schicht aus Polyamid mit einer Dicke von 0,5 bis 5 mm angeordnet ist.

### Aufgabe der Erfindung

Es ist die Aufgabe der Erfindung, einen elektrisch isolierenden Lagerring, insbesondere eines Wälzlagers, mit einer nur geringen Schichtdicke der elektrisch isolierenden Schicht anzugeben.

### Zusammenfassung der Erfindung

Diese Aufgabe wird erfindungsgemäß dadurch gelöst, dass die elektrisch isolierende Schicht als Kunststoff-Anteil ein Polyamid, insbesondere als einzigen Kunststoff-Anteil ein Polyamid, umfasst, dass die elektrisch isolierende Schicht eine Dicke von ca. 20 Mikrometern bis ca. 200 Mikrometern aufweist, und dass die elektrisch isolierende Schicht mittels einer Zwischenschicht an dem Grundkorpus fest angeordnet ist.

Es hat sich erwiesen, dass trotz der geringen Schichtdicke von nur ca. 20 Mikrometern bis ca. 200 Mikrometern ein hoher, zeitlich stabiler elektrischer Widerstand von ca. 50 Megaohm unter trockenen Bedingungen zu erreichen ist. Die zwischen der isolierenden Schicht aus dem Polyamid, insbesondere dem Polyamid als dem einzigen Kunststoff-Anteil der isolierenden Schicht, sowie dem Grundkorpus angeordnete, die gegenseitige Haftung vermittelnde Zwischenschicht stellt eine dauerhafte Anbindung der elektrisch isolierenden Schicht an das Grundkorpus sicher.

Das mit der elektrisch isolierenden Schicht versehenen Grundkorpus entspricht in seinen Abmessungen einem Standardlager, wenn das Grundkorpus mit etwas geringeren Abmessungen und einem nur geringen Untermaß, das der Schichtdicke von ca. 20 Mikrometern bis ca. 200 Mikrometern entspricht, vorgehalten wird.

Die relative Dickenänderung der elektrisch isolierenden Schicht bei einer Temperaturerhöhung auf ca. 120 °C unter mechanischer Druckbelastung beträgt im Dauerversuch mehr als ca. 2 %, was jedoch aufgrund der geringen Schichtdicke von weniger als ca. 200 Mikrometer ausreichend ist.

Es lassen sich insbesondere elektrisch isolierende Lagerringe mit Durchmessern von ca. 30 bis ca. 500 mm mit der elektrisch isolierenden Schicht versehen.

Vorzugsweise ist vorgesehen, dass die elektrisch isolierende Schicht ausschließlich aus dem Polyamid oder einer Mischung von Polyamiden besteht. Der Kunststoff-Anteil der elektrisch isolierenden Schicht kann ausschließlich aus dem Polyamid, beispielsweise Polyamid-11 oder Polyamid-12, bestehen. Alternativ hierzu kann der Kunststoff-Anteil der elektrisch isolierenden Schicht aus einer Mischung (Blend) aus verschiedenen Polyamiden bestehen, beispielsweise aus einer Mischung aus Polyamid 11 mit Polyamid 12. Die elektrisch isolierende Schicht kann Polyamid, entweder in Reinform oder als Mischung, mit anorganischen Zusätzen, die kein Kunststoff sind, umfassen, die weniger als 50 Gewichtsprozent der elektrisch isolierenden Schicht ausmachen können.

Vorzugsweise ist vorgesehen, dass das Polyamid ein Polyamid-11 oder ein Polyamid-12 ist. Polyamid-11 bzw. Polyamid-12 bzw. Mischungen von Polyamid-11 mit Polyamid-12 weisen gegenüber anderen Polyamiden wie Polyamid-6, Polyamid-66 oder Polyamid-46 eine deutlich geringere Fähigkeit zur Aufnahme von Feuchtigkeit auf, so dass sich die elektrischen Isolationseigenschaften verbessern. Die Angaben zu den speziellen Polyamiden entsprechen dabei der ISO-Norm ISO1043.

Vorzugsweise ist vorgesehen, dass die Dicke der elektrisch isolierenden Schicht ca. 100 Mikrometer beträgt. Bei einer wesentlich höheren Dicke treten innerhalb der elektrisch isolierenden Schicht mechanische Spannungen, insbesondere an Kanten des Grundkorpus auf. Bei einer wesentlich geringeren Dicke ist eine vollständige und dauerhafte, entlang der gesamten äußeren Mantelfläche bzw. den Stirnflächen sich erstreckende elektrische Isolierung aufwendig herzustellen.

Vorzugsweise ist vorgesehen, dass die Zwischenschicht durch eine aufgeraute Fläche des Grundkorpus gebildet ist, wobei das Polyamid die rauhigkeitsbedingten Grenzflächenrisse ausfüllt. Die aufgeraute Fläche des Grundkorpus kann beispielsweise mittels eines mechanischen Strahlverfahrens hergestellt werden, so dass Grenzflächenrisse wie Unebenheiten und Nuten entstehen, in die das auf die aufgeraute Fläche des Grundkorpus aufgebrachte Polyamid eindringt, um eine mechanische Verkrallung zwischen der elektrisch isolierenden Schicht und dem Grundkorpus auszubilden. Das mechanische Strahlverfahren kann beispielsweise ein Sandstrahlen sein, wobei eine mittlere Rauhigkeit R_{A} von ca. 3 Mikrometer für eine sichere Anbindung der elektrisch isolierenden Schicht an das Grundkorpus, beispielsweise aus einem Wälzlagerstahl, ausreichend ist.

Alternativ oder ergänzend zu der durch eine aufgeraute Fläche des Grundkorpus gebildeten Zwischenschicht ist vorzugsweise vorgesehen, dass die Zwischenschicht durch eine Lage eines anorganischen Materials, insbesondere durch eine Zinkphosphatlage, gebildet ist. Die Zinkphosphatlage weist dabei eine Schichtdicke von ca. 3 Mikrometern auf und lässt sich beispielsweise nasschemisch leicht erzeugen.

Vorzugsweise ist vorgesehen, dass die elektrisch isolierende Schicht als durch ein Tempern ausgehärtete, mit einem Schleifprozess nachbearbeitete Spritzbeschichtung ausgebildet ist. Der elektrisch isolierende Lagerring lässt sich dann einfach herstellen, indem das Grundkorpus bereitgestellt wird, auf das Grundkorpus die Zwischenschicht aufgebracht wird, entweder durch Aufbringen der Lage eines anorganischen Materials oder durch Aufrauen der Oberfläche des Grundkorpus im Bereich der äußeren Mantelfläche bzw. der beiden Stirnflächen eine Sprühemulsion aus dem Polyamid, insbesondere aus Polyamid-11, Polyamid-12 oder einer Mischung von Polyamid-11 mit Polyamid-12, aufgetragen und nachfolgend bei Temperaturen bis ca. 200 °C getempert werden, wonach abschließend die durch das Tempern ausgehärtete Spritzbeschichtung auf Maß abgeschliffen oder abgedreht wird.

Vorzugsweise ist vorgesehen, dass die elektrisch isolierende Schicht zusätzlich zu dem Polyamid Glasfasern enthält, wobei die Glasfasern die elektrisch isolierende Schicht mechanisch stabilisieren und zu der elektrischen Isolierung beitragen.

Weitere Vorteile und Merkmale der Erfindung ergeben sich aus den abhängigen Ansprüche sowie aus der Beschreibung eines Ausführungsbeispiels.

Die Erfindung wird im folgenden unter Bezugnahme auf die anliegenden Zeichnungen näher beschrieben und erläutert.

### Kurze Beschreibung der Zeichnungen

- Fig. 1: zeigt eine teilweise geschnittene perspektivische Ansicht eines ersten Ausführungsbeispiels eines erfindungsgemäßen Lagerrings,
- Fig. 2: zeigt eine geschnittene schematische Ansicht eines vergrößerten Ausschnitts des ersten Ausführungsbeispiels des erfindungsgemäßen Lagerrings, und
- Fig. 3: zeigt eine geschnittene schematische Ansicht eines vergrößerten Ausschnitts eines zweiten Ausführungsbeispiels eines erfindungsgemäßen Lagerrings.

### Detaillierte Beschreibung der Zeichnungen

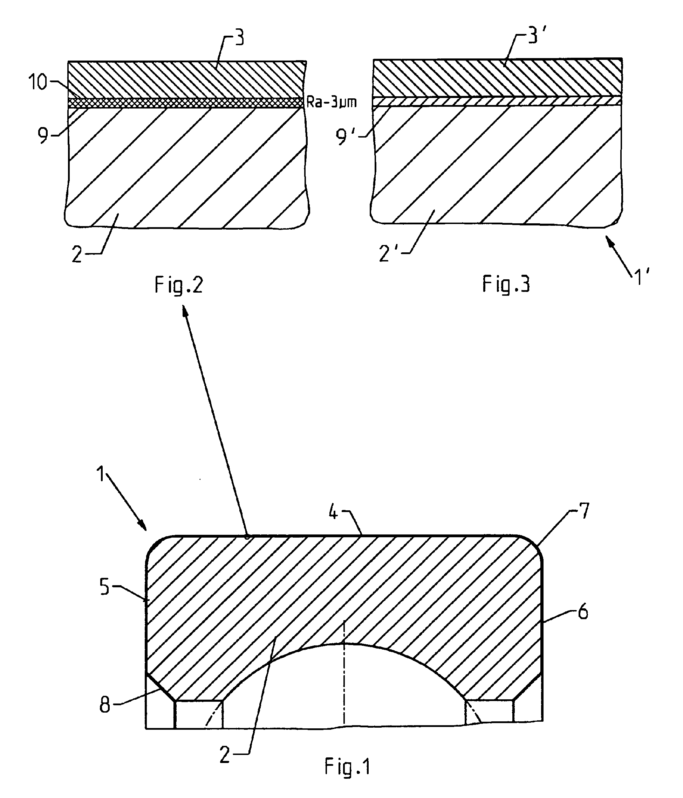

Fig. 1 zeigt einen Lagerring 1 eines Lagers, nämlich eines Wälzlagers, speziell eines Kugellagers, wobei das Korpus des Lagerrings 1 ein Grundkorpus 2 aus einem elektrisch leitenden Material, nämlich einem Wälzlagerstahl, und eine an dem Grundkorpus 2 feste elektrisch isolierende Schicht 3 umfasst. Die elektrisch isolierende Schicht 3 weist eine Schichtdicke von ca. 100 Mikrometern auf und ist damit deutlich dünner als die Wanddicke des Grundkorpus 2 des Lagerrings 1. Die elektrisch isolierende Schicht 3 ist in der Darstellung von Fig. 1 als Verdickung des Umrisses des geschnittenen Grundkorpus 2 dargestellt und in ihrer Schichtdicke übertrieben dargestellt.

Die elektrisch isolierende Schicht 3 erstreckt sich als durchgehende Beschichtung mit annähernd konstanter Schichtdicke entlang der äußeren Mantelfläche 4 sowie der beiden Stirnflächen 5, 6 des Lagerrings 1. Die elektrisch isolierende Schicht 3 überdeckt ebenfalls mit im wesentlichen der gleichen Schichtdicke von ca. 100 Mikrometern die Kanten 7 zwischen der äußeren Mantelfläche 4 und den Stirnflächen 5, 6 sowie Abschrägungen 8 der Stirnflächen 5, 6.

Die elektrisch isolierende Schicht 3 wurde als Spritzbeschichtung aus einem Polyamid, nämlich aus Polyamid-11, aufgetragen, dann durch ein Tempern ausgehärtet und anschließend mit einem Schleifprozess nachbearbeitet, insbesondere auf Maß abgetragen. Vor dem Auftragen der elektrisch isolierenden Schicht 3 waren die Kanten 7 verrundet worden. Die elektrisch isolierende Schicht 3 besteht damit vollständig aus dem ausgehärteten Polyamid-11.

Fig. 2 zeigt einen Ausschnitt der Grenzfläche des Grundkorpus 2 zu der elektrisch isolierenden Schicht 3 aus dem in Fig. 1 dargestellten Ausführungsbeispiel. Es ist erkennbar, dass die elektrisch isolierende Schicht 3 über eine Zwischenschicht 9 an dem Grundkorpus 2 fest angebracht ist, wobei die Zwischenschicht 9 durch eine Aufrauung der Fläche des Grundkorpus 2 mit einer mittleren Rauhigkeit von R_{A} ca. 3 Mikrometer gebildet wird, wobei Grenzflächenrisse 10 wie Nuten und Unebenheiten an der zuvor ebenen Oberfläche des Grundkorpus 2 entstehen, und wobei das Polyamid der elektrisch isolierenden Schicht 3 in die rauhigkeitsbedingten Grenzflächenrisse 10 eindringt.

Bildlich nicht dargestellt sind Glasfasern als weiterer Bestandteil des Materials der elektrisch isolierenden Schicht 3.

Fig. 3 zeigt eine Darstellung analog der aus Fig. 2 eines weiteren elektrisch isolierenden Lagerrings 1', wobei zwischen einem Grundkorpus 2' und einer elektrisch isolierenden Schicht 3' aus einer Mischung aus Polyamid, nämlich einer Mischung aus Polyamid-11 mit Polyamid-12, eine Zwischenschicht 9' vorgesehen ist. Die Zwischenschicht 9' wird durch eine Lage 11 eines anorganischen Materials, nämlich durch eine Zinkphosphatlage von ca. 3 Mikrometern Schichtdicke, gebildet, wobei die Zinkphosphatlage auf die im wesentlichen glatte Oberfläche des Grundkorpus 2' nasschemisch abgeschieden wurde.

Bei den vorstehend beschriebenen Ausführungsbeispielen umfasst die elektrisch isolierende Schicht 3, 3' das Polyamid in dem Sinne, dass die elektrisch isolierende Schicht 3 vollständig aus dem Polyamid-11 bzw. die elektrisch isolierende Schicht 3' vollständig aus der Mischung von Polyamid-11 und Polyamid-12 bestand. Es versteht sich, dass die elektrisch isolierende Schicht auch Polyamid in dem Sinne umfassen kann, dass das Polyamid mit einem anderen Kunststoff, beispielsweise PEEK oder PPS, gemischt die elektrisch isolierende Schicht ausbilden kann. Es versteht sich weiter, dass die elektrisch isolierende Schicht zusätzlich zu dem Polyamid oder der Mischung aus dem einen Polyamid mit einem anderen Polyamid oder der Mischung aus dem Polyamid mit einem anderen Kunststoff noch Zusätze aufweisen kann, wie beispielsweise keramische Zusätze oder Glasfasern.

**Bezugszeichenliste**

| | |
|---|---|
| 1 | Lagerring |
| 2, 2' | Grundkorpus |
| 3, 3' | elektrisch isolierende Schicht |
| 4 | äußere Mantelfläche |
| 5, 6 | Stirnfläche |
| 7 | Kante |
| 8 | Abschrägung |
| 9, 9' | Zwischenschicht |
| 10 | Grenzflächenriss |
| 11 | Lage |

## Patentansprüche

1. Elektrisch isolierender Lagerring, insbesondere eines Wälzlagers, umfassend
ein Grundkorpus (2), und
eine an dem Grundkorpus (2) feste elektrisch isolierende Schicht (3),
**dadurch gekennzeichnet,**
**dass** die elektrisch isolierende Schicht (3) ein Polyamid umfasst, dass die elektrisch isolierende Schicht (3) eine Dicke von ca. 20 Mikrometern bis ca. 200 Mikrometern aufweist, und
**dass** die elektrisch isolierende Schicht (3) mittels einer Zwischenschicht (9) an dem Grundkorpus (2) fest angeordnet ist.

2. Elektrisch isolierender Lagerring nach Anspruch 1, **dadurch gekennzeichnet, dass** die Dicke der elektrisch isolierenden Schicht (3) ca. 100 Mikrometer beträgt.

3. Elektrisch isolierender Lagerring nach Anspruch 1 oder 2, **dadurch gekennzeichnet, dass** die Zwischenschicht (9) durch eine aufgeraute Fläche des Grundkorpus (2) gebildet ist, wobei das Polyamid die rauhigkeitsbedingten Grenzflächenrisse (10) ausfüllt.

4. Elektrisch isolierender Lagerring nach einem der Ansprüche 1 bis 3, **dadurch gekennzeichnet, dass** die Zwischenschicht (9') durch eine Lage (11) eines anorganischen Materials, insbesondere durch eine Zinkphosphatlage, gebildet ist.

5. Elektrisch isolierender Lagerring nach einem der Ansprüche 1 bis 4, **dadurch gekennzeichnet, dass** die elektrisch isolierende Schicht (3, 3') als durch ein Tempern ausgehärtete, mit einem Schleifprozess nachbearbeitete Spritzbeschichtung ausgebildet ist.

6. Elektrisch isolierender Lagerring nach einem der Ansprüche 1 bis 5, **dadurch gekennzeichnet, dass** die elektrisch isolierende Schicht (3, 3') ausschließlich aus dem Polyamid oder einer Mischung von Polyamiden besteht.

7. Elektrisch isolierender Lagerring nach einem der Ansprüche 1 bis 6, **dadurch gekennzeichnet, dass**, das Polyamid ein Polyamid-11 oder ein Polyamid-12 ist.

8. Elektrisch isolierender Lagerring nach einem der Ansrüche 1 bis 7, **dadurch gekennzeichnet, dass** die elektrisch isolierende Schicht zusätzlich zu dem Polyamid Glasfasern enthält.

9. Lager, insbesondere Wälzlager, umfassend einen elektrisch isolierenden Lagerring (1, 1') nach einem der Ansprüche 1 bis 8.

## Claims

1. Electrically insulating bearing ring, in particular of a rolling bearing, comprising
a base body (2), and
an electrically insulating layer (3) secured on the base body (2),
**characterized**
**in that** the electrically insulating layer (3) comprises a polyamide,
**in that** electrically insulating layer (3) has a thickness of about 20 micrometers to about 200 micrometers, and
**in that** the electrically insulating layer (3) is securely arranged on the base body (2) by means of an intermediate layer (9).

2. Electrically insulating bearing ring according to Claim 1, **characterized in that** the thickness of the electrically insulating layer (3) is about 100 micrometers.

3. Electrically insulating bearing ring according to Claim 1 or 2, **characterized in that** the intermediate layer (9) is formed by a roughened surface of the base body (2), the polyamide filling the interfacial cracks (10) that are caused by the roughness.

4. Electrically insulating bearing ring according to one of Claims 1 to 3, **characterized in that** the intermediate layer (9') is formed by a layer (11) of an inorganic material, in particular by a zinc phosphate layer.

5. Electrically insulating bearing ring according to one of Claims 1 to 4, **characterized in that** the electrically insulating layer (3, 3') is formed as a spray coating that is cured by heat treatment and subsequently re-worked by a grinding process.

6. Electrically insulating bearing ring according to one of Claims 1 to 5, **characterized in that** the electrically insulating layer (3, 3') consists exclusively of the polyamide or a mixture of polyamides.

7. Electrically insulating bearing ring according to one of Claims 1 to 6, **characterized in that** the polyamide is a polyamide 11 or a polyamide 12.

8. Electrically insulating bearing ring according to one of Claims 1 to 7, **characterized in that**, in addition to the polyamide, the electrically insulating layer contains glass fibers.

9. Bearing, in particular a rolling bearing, comprising an electrically insulating bearing ring (1, 1') according to one of Claims 1 to 8.

## Revendications

1. Bague de palier électriquement isolante, en particulier pour un palier à roulement, comprenant
un corps de base (2), et
une couche électriquement isolante (3) fixe sur le corps de base (2),
**caractérisée en ce que** la couche électriquement isolante (3) comprend un polyamide, **en ce que** la couche électriquement isolante (3) présente une épaisseur d'environ 20 micromètres à environ 200 micromètres, et **en ce que** la couche électriquement isolante (3) est disposée de façon fixe sur le corps de base (2) au moyen d'une couche intermédiaire (9).

2. Bague de palier électriquement isolante selon la revendication 1, **caractérisée en ce que** l'épaisseur de la couche électriquement isolante (3) vaut environ 100 micromètres.

3. Bague de palier électriquement isolante selon la revendication 1 ou 2, **caractérisée en ce que** la couche intermédiaire (9) est formée par une surface dépolie du corps de base (2), dans laquelle le polyamide remplit les stries de l'interface (10) dues à la rugosité.

4. Bague de palier électriquement isolante selon l'une quelconque des revendications 1 à 3, **caractérisée en ce que** la couche intermédiaire (9') est formée par une couche (11) d'un matériau inorganique, en particulier par une couche de phosphate de zinc.

5. Bague de palier électriquement isolante selon l'une quelconque des revendications 1 à 4, **caractérisée en ce que** la couche électriquement isolante (3, 3') est réalisée sous la forme d'un revêtement pulvérisé durci par recuit et parachevé par une opération de meulage.

6. Bague de palier électriquement isolante selon l'une quelconque des revendications 1 à 5, **caractérisée en ce que** la couche électriquement isolante (3, 3') se compose exclusivement du polyamide ou d'un mélange de polyamides.

7. Bague de palier électriquement isolante selon l'une quelconque des revendications 1 à 6, **caractérisée en ce que** le polyamide est un polyamide-11 ou un polyamide-12.

8. Bague de palier électriquement isolante selon l'une quelconque des revendications 1 à 7, **caractérisée en ce que** la couche électriquement isolante contient des fibres de verre en plus du polyamide.

9. Palier, en particulier palier à roulement, comprenant une bague de palier électriquement isolante (1, 1') selon l'une quelconque des revendications 1 à 8.
